# EUROPEAN PATENT APPLICATION

(11) **EP 2 123 684 A1**
(43) Date of publication of application: **25.11.2009**
(21) Application number: 08290456.6
(22) Date of filing: 14.05.2008
(51) Int. Cl.: C08F 2/38, C08F 12/00, C08F 20/10, C08F 2/44, C08F 2/06, C08L 95/00

(54) **Polymer synthesis in presence of bitumen**

(71) Applicant: SHELL INTERNATIONAL RESEARCH MAATSCHAPPIJ B.V., 2596 HR Den Haag (NL)
(72) Inventor: Reynhout, Marinus, Johannes, 1031 HW Amsterdam (NL); Soubigou, Chantal, 76650 Petit Couronne (FR); Weijers, Cees, 5600 MB Eindhoven (NL); Ziari, Maya, 9405 TA Assen (NL); Van Benthem Van Duuren, Gabrielle A M G, 5600 MB Eindhoven (NL)
(74) Representative: Zeestraten, Albertus W. J.

(57) **Abstract**

A method for synthesising a homopolymer or copolymer from a alkenyl monomer and optionally further unsaturated monomers, is disclosed. The weight average molecular weight (M_{w}) of the homopolymer or copolymer is less than 100,000. The polymerisation occurs in the presence of a bituminous component, wherein the amount of the bituminous component is less than 50wt% based upon the weight of the alkenyl monomers, any further unsaturated monomers and the bituminous component.

## Description

### Field of the Invention

The invention relates to a method for synthesising a homopolymer or copolymer from an alkenyl monomer and optionally further unsaturated monomers, and further relates to homopolymers or copolymers made according to the process of the invention.

### Background of the Invention

Vinyl monomers such as styrene can be polymerised to form homopolymers such as polystyrene:

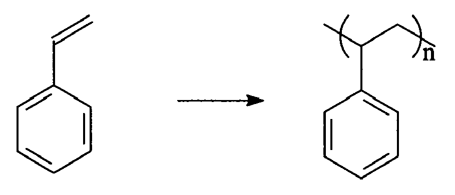

If an additional unsaturated monomer such as butadiene or maleic anhydride is present during the polymerisation, a copolymer can be formed. If the additional unsaturated monomer is added after the completion of the first polymerisation, a block copolymer can be formed.

Styrene will undergo spontaneous polymerisation at ambient temperature, but the reaction rate is slow. Higher temperatures (e.g. above 100°C) are required in order for spontaneous polymerisation to proceed at a useful rate. Free radical initiators such as peroxides and azo compounds are often used to enable the polymerisation to proceed at useful reaction rates at a lower temperature. The initiators can also reduce oligomer production. The weight average molecular weight (M_{w}) for general purpose polystyrene produced by commercial processes is typically in the range from 200,000 to 400,000. Chain transfer agents are occasionally added to styrene to reduce the molecular weight of the polymer. Known chain transfer agents include α-methyl styrene dimer, 1-dodecanethiol, 1,1-dimethyl-1-decanethiol and terpinolene.

Polystyrene having a weight average molecular weight (M_{w}) of less than 180,000 is often too brittle for applications where the strength of the polymer is important. However, in certain applications it is desirable to have a much lower molecular weight. For example, the present inventors have found that when adding polystyrene to polymer-modified bitumen to improve the properties of the polymer-modified bitumen, it is desirable to use low molecular weight polystyrene.

Low molecular weight polystyrene can be prepared using anionic polymerisation. US 6,916,885 describes an anionic polymerisation process using an organolithium initiator and n-alkyl glycidyl ether chain terminators. Higher amounts of initiator are required to produce lower molecular weight polystyrene, so it becomes increasingly costly to prepare lower molecular molecular weight polystyrene. It is desirable to provide an alternative process for preparing low molecular weight polystyrene, and it is desirable to avoid the use of expensive organolithium initiators.

### Summary of the Invention

Accordingly, the present invention provides a method for synthesising a homopolymer or copolymer from an alkenyl monomer and optionally further unsaturated monomers, wherein the weight average molecular weight (M_{w}) of the homopolymer or copolymer is less than 100,000, comprising a step of polymerising the alkenyl monomer, and optionally further unsaturated monomers, in the presence of a bituminous component, wherein the amount of the bituminous component is less than 50wt% based upon the weight of the alkenyl monomer, any further unsaturated monomers and the bituminous component.

The present invention further provides a homopolymer or copolymer prepared according to the process of the invention.

The present inventors have surprisingly found that the presence of the bituminous component limits the molecular weight of the homopolymer or copolymer. Increasing the amount of the bituminous component decreases the molecular weight of the polymer. The resulting polymer contains the bituminous component, and depending on the amount of polymer used, the colour of the resulting polymer ranges from yellow to brown to black. Therefore the present invention provides yellow or brown or black polymer without the need for the addition of pigments.

US 5,039,342 and US 4,301,051 both disclose methods wherein vinyl monomers are reacted in the presence of bitumen. However, the aim of both these methods is to produce a modified bitumen, wherein polymer chains are grafted to the bitumen, and in both methods, the amount of bitumen is significantly greater than the amount of vinyl monomers. By contrast, the method of the present invention is a method for preparing a low molecular weight polymer and during the polymerisation, the bituminous component is present at less than 50wt%, based upon the weight of the reactants. The polymer product contains the bituminous component, but will be composed predominantly of the polymerised alkenyl monomer.

### Detailed Description of the Invention

The alkenyl monomer used in the present invention preferably is of general formula A or B: 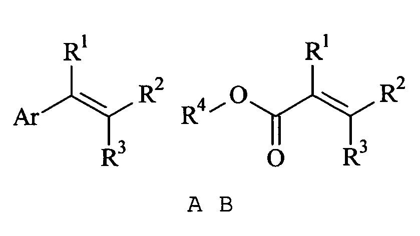 wherein Ar is an aromatic group; R¹, R² and R³ are independently chosen from hydrogen and C₁₋₁₀ alkyl; and R⁴ is C₁₋₁₀ alkyl or an aromatic group. The aromatic group is typically phenyl, C₁₋₁₀ alkyl-substituted phenyl, halo-substituted phenyl, sulphate-substituted phenyl, sulphonate-substituted phenyl, naphthalene, C₁₋₁₀ alkyl-substituted naphthalene, halo-substituted napthalene, sulphate-substituted naphthalene or sulphonate-substituted naphthalene and is preferably phenyl, tolyl, xylyl or chlorophenyl. R¹, R² and R³ are preferably hydrogen or methyl. R⁴ is preferably C₁₋₁₀ alkyl and is most preferably methyl, ethyl, propyl or butyl. Most preferably all of R¹, R² and R³ are hydrogen such that the alkenyl compound contains a terminal alkene and is a vinyl compound. Preferred alkenyl monomers of formula A include styrene, p-chloro styrene, vinyl toluene, vinyl xylene, ethyl vinyl benzene and vinyl naphthalene. Preferred alkenyl monomers of formula B include methyl acrylate, ethyl acrylate, methyl methacrylate, ethyl methacrylate, propyl acrylate, propyl methacrylate, butyl acrylate and butyl methacrylate. The most preferred alkenyl monomer is styrene.

Further unsaturated monomers may be present during the polymerisation. In one embodiment of the invention, an unsaturated monomer comprising a carboxylic acid anhydride, a carboxylic acid or an epoxide group is present during the polymerisation. Preferred monomers include maleic anhydride, itaconic anhydride, dimethyl maleic anhydride, nadic anhydride, nadic methyl anhydride, tetrahydro phthalic anhydride, acrylic acid, methacrylic acid, maleic acid, fumaric acid, itaconic acid, crotonic acid, glycidyl acrylate and glycidyl methacrylate. Preferably the unsaturated monomer comprises a carboxylic acid anhydride, more preferably the unsaturated monomer is maleic anhydride. In an alternative embodiment of the invention, diene monomers are present during the polymerisation. Preferred diene monomers are butadiene and isoprene.

To prepare a random copolymer, the further unsaturated monomers should be present at the start of the polymerisation. To prepare a block copolymer, the polymerisation of the alkenyl monomers in the presence of the bituminous component should proceed and subsequently the further unsaturated monomers should be added.

The monomers are polymerised in the presence of a bituminous component. The polymerisation may be carried out in air or may be carried out in an inert atmosphere, e.g. an argon atmosphere. The bituminous component is preferably dissolved in a solvent. In a preferred embodiment of the invention, the alkenyl monomer acts as the solvent and no additional solvent is required. If a homogenenous polymer product is desired, it is preferable to stir the reactants during the polymerisation. The temperature during the polymerization is preferably in the range of from ambient temperature to 200°C, preferably from 90 to 200°C. Higher temperatures are not preferred as this can lead to degradation of polymer. The pressure during the polymerization is preferably from atmospheric pressure up to 10 bar (1MPa).

The bituminous component is preferably bitumen. The bitumen may be a residue from the distillation of crude oil, a cracked residue, a naturally occurring bitumen or a blend of various bitumen types. Examples of bitumens that may be conveniently used in the present invention include distillation or "straight run" bitumen, precipitation bitumen, e.g. propane bitumen, oxidised or blown bitumen, naphthenic bitumen or mixtures thereof. The penetration at 25°C of the bitumen (as measured according to EN 1426) is preferably from 10 to 200 dmm. Alternatively, instead of using bitumen, the bituminous component may be a component that has been extracted from bitumen, e.g. the bituminous composition may consist essentially of asphaltenes. Asphaltenes are one of four broad component groups found in bitumen (the others are resins, aromatics and saturates; resins, aromatics and saturates are collectively known as maltenes). Asphaltenes are n-heptane insoluble black or brown amorphous solids, and are generally considered to be highly polar and complex aromatic materials of fairly high molecular weight.

The amount of the bituminous component is less than 50wt% based upon the weight of the alkenyl monomer, any further unsaturated monomers and the bituminous component. Preferably the amount of the bituminous component is less than 40wt% based up the weight of the alkenyl monomer, any further unsaturated monomers. Preferably the amount of the bituminous component is more than 2wt% based upon the weight of the alkenyl monomer, any further unsaturated monomers and the bituminous component. The amount of the bituminous component used affects the molecular weight of the polymer product; increasing the amount of the bituminous component decreases the molecular weight of the polymer. The amount of the bituminous component used also affects the colour of the polymer product; as the amount of bituminous component increases the colour of the product darkens from yellow to brown to dark brown to black.

In one embodiment of the invention, the monomers are polymerised in the presence of the bituminous component and a free-radical initiator. Preferred initiators are peroxide compounds and azo compounds. Preferably up to 2wt% of initiator is used, based upon the weight of the alkenyl monomer, any further unsaturated monomers and the bituminous component, more preferably up to 0.8wt%. Using an initiator is desirable because it leads to less unreacted monomer and therefore easier separation of the polymer product with associated safety and cost benefits. Initiators are likely to be expensive compounds, so it is preferable to use the minimum amount of initiator necessary to achieve sufficient reaction of the monomers.

In another embodiment of the invention, the monomers may be polymerised in the presence of a co-solvent that will ultimately be incorporated into the polymer product. Co-solvents might include aromatic compounds such as dodecylbenzene and plasticizers such as low molecular weight polypropylene.

The weight average molecular weight (M_{w}) of the homopolymer or copolymer is less than 100,000. Preferably the weight average molecular weight (M_{w}) is less than 80,000, more preferably less than 50,000. The polydispersity of the homopolymer or copolymer (the ratio of the weight average molecular weight to the number average molecular weight) is preferably less than 5, more preferably less than 2.

The present invention further provides homopolymers and copolymers prepared according to the process of the invention.

The homopolymers and copolymers of the invention are suitably incorporated into bitumen to prepare polymer-modified bitumen.

### Examples

The invention will now be described by reference to examples which are not intended to be limiting of the invention.

### Synthesis of Polystyrene

A bituminous component was dissolved in styrene and the mixture was heated to 140°C. Two types of bituminous component were used: a 70/100 penetration grade bitumen (denoted as type 1 in Table 1) and a vacuum flashed cracked residue (denoted as type 2 in Table 1). A dibenzoyl peroxide initiatior was incorporated in some of the experiments. The number average and weight average molecular weights of the polystyrene products were measured and are reported in table 1. The colour of the polystyrene in the examples of the invention (wherein bituminous components were used) varied from dark brown to black.

**Table 1**

| | Bitumen type | Scale (g) | Styrene (wt%) | Bitumen (wt%) | Dibenzoyl peroxide (mg) | Polymer product | | |
|---|---|---|---|---|---|---|---|---|
| | | | | | | M_{w} | Mₙ | Pd |
| Example 1 | 1 | 10 | 55 | 45 | - | 46,800 | 16,400 | 2.85 |
| Example 2 | 1 | 10 | 60 | 40 | - | 42,900 | 17,300 | 2.48 |
| Example 3 | 1 | 10 | 65 | 35 | - | 41,500 | 14,600 | 2.84 |
| Example 4 | 1 | 10 | 70 | 30 | - | 37,100 | 13,400 | 2.77 |
| Example 5 | 1 | 10 | 80 | 20 | - | 38,900 | 13,100 | 2.97 |
| Example 6 | 1 | 10 | 85 | 15 | - | 53,000 | 17,300 | 3.06 |
| Example 7 | 1 | 10 | 90 | 10 | - | 47,100 | 15,600 | 3.02 |
| Example 8 | 1 | 10 | 95 | 5 | - | 55,000 | 16,000 | 3.44 |
| Example 9 | 1 | 10 | 98 | 2 | - | 74,000 | 21,000 | 3.52 |
| Example 10 | 1 | 10 | 99 | 1 | - | 88,000 | 23,000 | 3.82 |
| Comparative Example 1 | 1 | 10 | 100 | 0 | - | 95,000 | 25,000 | 3.80 |
| Example 11 | 1 | 1200 | 81 | 19 | 2500 | 77,500 | 34,200 | 2.27 |
| Comparative Example 2 | 2 | 12 | 100 | 0 | 63 | 97,600 | 28,700 | 3.40 |
| Example 12 | 2 | 12 | 80 | 20 | 46 | 34,000 | 14,200 | 2.39 |
| Example 13 | 2 | 15 | 70 | 30 | 50 | 15,860 | 9,800 | 1.62 |
| Example 14 | 2 | 15 | 60 | 40 | 45 | 13,200 | 8,500 | 1.55 |
| Example 15 | 1 | 6 | 83 | 17 | 7.4 | 59,700 | 23,900 | 2.50 |
| Example 16 | 1 | 7.5 | 67 | 33 | 7.4 | 32,800 | 16,600 | 1.98 |

### Synthesis of Poly(Butyl Acrylate)

A 70/100 penetration grade bitumen was dissolved in butyl acrylate. A dibenzoyl peroxide initiatior was incorporated. The mixture was heated to 140°C. The number average and weight average molecular weights of the poly(butyl acrylate) products were measured and are reported in table 2.

**Table 2**

| | Butyl Acrylate (g) | Bitumen (g) | Dibenzoyl peroxide (mg) | Polymer product | | |
|---|---|---|---|---|---|---|
| | | | | M_{w} | Mₙ | Pd |
| Example 17 | 5.749 | 3.646 | 28.7 | 33,700 | 27,500 | 1.23 |
| Comparative Example 3 | 2.898 | 0 | 14.5 | 92,000 | 62,000 | 1.48 |

## Claims

1. A method for synthesising a homopolymer or copolymer from an alkenyl monomer and optionally further unsaturated monomers, wherein the weight average molecular weight (M_{w}) of the homopolymer or copolymer is less than 100,000, comprising a step of polymerising the alkenyl monomer, and optionally further unsaturated monomers, in the presence of a bituminous component, wherein the amount of the bituminous component is less than 50wt% based upon the weight of the alkenyl monomer, any further unsaturated monomers and the bituminous component.

2. A method according to claim 1, wherein the alkenyl monomer is of general formula A or B: 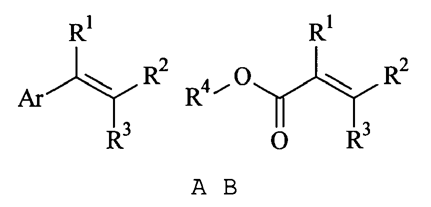 wherein Ar is an aromatic group; R¹, R² and R³ are independently chosen from hydrogen and C₁₋₁₀ alkyl; and R⁴ is C₁₋₁₀ alkyl or an aromatic group.

3. A method according to claim 2, wherein the alkenyl monomer is styrene, p-chloro styrene, vinyl toluene, vinyl xylene, ethyl vinyl benzene, vinyl naphthalene, methyl acrylate, ethyl acrylate, methyl methacrylate, ethyl methacrylate, propyl acrylate, propyl methacrylate, butyl acrylate or butyl methacrylate.

4. A method according to any preceding claim, wherein the further unsaturated monomers comprise a carboxylic acid anhydride, a carboxylic acid or an epoxide group.

5. A method according to any preceding claim, wherein the bituminous component is bitumen.

6. A method according to any preceding claim, wherein the alkenyl monomers are polymerised in the presence of a free-radical initiator.

7. A homopolymer or copolymer prepared according to the method of any preceding claim.

8. A polymer-modified bitumen comprising a homopolymer or copolymer according to claim 7.
